# EUROPÄISCHE PATENTSCHRIFT

(11) **EP 1 066 426 B1**
(45) Veröffentlichungstag und Bekanntmachung des Hinweises auf die Patenterteilung: **05.12.2001**
(21) Anmeldenummer: 99914570.9
(22) Anmeldetag: 19.03.1999
(51) Int. Cl.: E01C 19/26, B62D 7/02

(54) **BODENVERDICHTUNGSMASCHINE MIT MINDESTENS EINER WALZENEINHEIT**
ROAD ROLLER COMPRISING AT LEAST ONE ROLLER-WHEEL UNIT
COMPACTEUR ROUTIER COMPORTANT AU MOINS UNE UNITE CYLINDRE

(30) Priorität: 26.03.1998 DE 19813475
(43) Veröffentlichungstag der Anmeldung: 10.01.2001
(73) Patentinhaber: Vibromax Bodenverdichtungsmaschinen GmbH, 06466 Gatersleben (DE)
(72) Erfinder: GOTTSCHLING, Hans, D-40595 Düsseldorf (DE); VETTERLEIN, Holger, D-06484 Ditfurt (DE)
(74) Vertreter: Preissner, Nicolaus, Dipl.-Ing.
(86) Internationale Anmeldenummer: EP9902348
(87) Internationale Veröffentlichungsnummer: WO9949139

(56) Entgegenhaltungen:
- EP-A- 0 432 711
- DE-C- 586 864
- US-A- 3 868 194

## Beschreibung

Die vorliegende Erfindung betrifft eine Bodenverdichtungsmaschine mit mindestens einer Walzeneinheit, in der eine zylindrische Walze um ihre Mittelachse drehbar gelagert ist, wobei die mindestens eine Walzeneinheit an einem Rahmen der Bodenverdichtungsmaschine um eine Lenkachse drehbar gelagert und mit einem Mittelstück verbunden ist, das über zwei einander gegenüberliegende wartungsfreie Schräggelenklager um die Lenkachse drehbar gelagert ist.

Derartige Bodenverdichtungsmaschinen sind beispielsweise aus der US-A-3868194 bekannt und kommen insbesondere im Straßenbau zum Einsatz. Bei der in der US' 194 beschriebenen Bodenverdichtungsmaschine ist die Walzeneinheit drehfest an einem Mittelstück befestigt, das drehbar in einer Hohlwelle gelagert ist. Das Mittelstück durchgreift hierbei die Hohlwelle und wird an der Oberseite über eine Schraubverbindung fixiert.

Zur Lenkung wird die gesamte Walzeneinheit gegenüber dem Rahmen verdreht. Die Walzeneinheit wird hierbei über nicht wartungsfreie Lager drehbar am Rahmen angebracht. Der Einbau ist großräumig und benötigt eine Dauerschmierung. Nachteilig sind der Kostenaufwand sowie der Platzbedarf und die Wartung durch Dauerschmierung. Sowohl die mit dem Rahmen der Bodenverdichtungsmaschine verbundene Hohlwelle als auch das an der Walzeneinheit befestigte Mittelstück müssen hochgenau bearbeitet werden, um die gewünschte spielfreie Führung sicherzustellen.

Aufgabe der vorliegenden Erfindung ist es daher, eine Bodenverdichtungsmaschine mit einer einfachen, kostengünstigen und kompakten Lagerung der Walzeneinheit am Rahmen bereitzustellen.

Erfindungsgemäß wird diese Aufgabe dadurch gelöst, daß zwei Zapfenteile, die drehfest mit einer Aufnahme am Rahmen verbunden sind, in das Mittelstück eingreifen, und daß die Schräggelenklager zwischen dem Mittelstück und den Zapfenteilen aufgenommen sind.

Die Verwendung wartungsfreier Lager ermöglicht einen Verzicht auf die bisher vorgesehene Dauerschmierung. Die Lager sind zwischen dem Mittelstück und den Zapfenteilen aufgenommen und kommen nicht mit der Aufnahme am Rahmen oder der Walzeneinheit selbst in Kontakt. Das Mittelstück und die Zapfenteile können somit unabhängig von weiteren Bauteilen hochgenau gefertigt werden. Komplizierte Maßnahmen an der Aufnahme oder der Walzeneinheit sind nicht erforderlich. Es ergibt sich ein einfacher und kompakter Aufbau.

Weiter wird durch die Verwendung von Schräggelenklagern eine O-Anordnung der Lager ermöglicht. Hierdurch läßt sich der Tragabstand der Lager über den tatsächlichen Abstand hinaus erhöhen. Die Lager können weiter zur Erhöhung der Lebensdauer gegeneinander verspannt werden.

Vorteilhafte Weiterbildungen und Ausgestaltungen der Erfindung gehen aus den Unteransprüchen hervor.

In vorteilhafter Ausgestaltung sind die Schräggelenklager in Lagerausnehmungen des Mittelstücks eingesetzt, und die Lagerzapfen greifen in Innenringe der Schräggelenklager ein. Vorteilhaft bei dieser Konstruktion ist der einfache Aufbau. Das Mittelstück muß lediglich mit Lagerausnehmungen versehen werden, während die Lagerzapfen separat hergestellt werden. Der Bearbeitungsaufwand sowie das zu zerspannende Volumen sind geringer als bei der Verwendung eines Mittelstücks in Form eines Zapfenkreuzes.

Vorteilhaft ist eines der Schräggelenklager mit einem Federelement, insbesondere einer Tellerfeder, am Mittelstück abgestützt. Dieses Federelement bewirkt einerseits eine Schwingungsdämpfung und ermöglicht andererseits eine spielfreie Montage der sich gegenüberliegenden Schräggelenklager. Wegen der hohen Federkraft werden Tellerfedern bevorzugt.

Gemäß einer vorteilhaften Weiterbildung weist die Aufnahme einen im wesentlichen rechteckigen Rahmen auf, in den das Mittelstück einschiebbar ist, wobei der Rahmen mit zwei einander gegenüberliegenden Ausnehmungen versehen ist, durch die hindurch die Zapfenteile in die Schräggelenklager am Mittelstück eingreifen. Zur Montage kann das Mittelstück einfach in den Rahmen eingeschoben werden. Anschließend werden die Zapfenteile von gegenüberliegenden Seiten durch die Ausnehmungen des Rahmens hindurch in die Schräggelenklager eingeschoben. Die Montage ist rasch und einfach durchzuführen.

Vorteilhaft weisen die Zapfenteile einen Flansch auf, der über Schrauben an dem Rahmen der Aufnahme fixierbar ist. Hierdurch wird eine rasche und einfache Fixierung der Zapfenteile ermöglicht. Gleichzeitig werden die sich gegenüberliegenden Schräggelenklager durch die ebenfalls einander gegenüberliegenden Zapfenteile zuverlässig gehalten und können gegeneinander verspannt werden.

In weiterer vorteilhafter Ausgestaltung weist die Walzeneinheit zwei Bandagen auf, an denen die Walze um ihre Mittelachse drehbar gelagert ist, sowie zwei Lenkbügel zur Verbindung der Bandagen, die lösbar mit den Bandagen und dem Mittelstück verbunden sind. Die Bandagen und Lenkbügel können spiegelbildlich zueinander ausgebildet werden, so daß sich die Konstruktion vereinfacht. Die lösbare Verbindung zwischen Lenkbügeln und Bandagen sowie Lenkbügeln und Mittelstück ermöglicht eine einfache und unkomplizierte Montage.

Bei einer ersten vorteilhaften Ausführungsform ist das Mittelstück im wesentlichen zylindrisch ausgebildet und starr mit einer Platte verbunden, die über Schrauben an Lenkbügeln der Walzeneinheit befestigt ist. Diese Ausführungsform stellt sicher, daß die Walzeneinheit lediglich um die vorgesehene Lenkachse drehbar ist und schließt andere Bewegungen zuverlässig aus. Die Schraubverbindung zu den Lenkbügeln der Walzeneinheit dient zur Montageerleichterung.

Bei einer zweiten vorteilhaften Ausführungsform ist das Mittelstück im wesentlichen quaderförmig ausgebildet und weist zwei weitere wartungsfreie Schräggelenklager mit zugeordneten Zapfenteilen auf, die gegenüber den ersten Schräggelenklagern um 90 Grad versetzt angeordnet sind. Bei dieser Ausführungsform durchgreifen die Zapfenteile Lenkbügel der Walzeneinheit und sind an diesem drehfest befestigt. Diese Ausführungsform erlaubt zusätzlich zu der Drehung um die Lenkachse auch eine Drehung der Walzeneinheit um eine Pendelachse, die zur Lenkachse senkrecht steht. Bevorzugt verläuft die Pendelachse parallel zur Lenkachse der Bodenverdichtungsmaschine.

Diese Ausführungsform ermöglicht neben einer Lenkbewegung auch eine Pendelbewegung der Walzeneinheit zur Anpassung an Unebenheiten im Untergrund und zum Ausgleich von Schrägstellungen.

Vorteilhaft ist mindestens eines dieser weiteren Schräggelenklager mit einem Ring zum Toleranzausgleich am Mittelstück abgestützt. Durch diese Abstützung kann ein Ausgleich von Fertigungsungenauigkeiten erfolgen, so daß der Abstand der Schräggelenklager und der Zapfenteile an dem Abstand zwischen den Lenkbügeln angepaßt werden kann.

Bei der Verwendung derartiger Ringe bei beiden Schräggelenklagern kann darüber hinaus die Lage der Lenkbügel gegenüber dem Mittelstück variiert werden.

Selbstverständlich kann die Bodenverdichtungsmaschine zwei Walzeneinheiten aufweisen. Es wird in diesem Fall bevorzugt, wenn die Aufnahmen für die Walzeneinheiten baugleich sind, da sich der konstruktive Aufwand verringert.

Vorteilhaft ist in diesem Fall die vordere Walzeneinheit über ein zylindrisches Mittelstück und die hintere Walzeneinheit über ein quaderförmiges Mittelstück am Rahmen gelagert. Beide Walzeneinheiten sind somit lenkbar, während die hintere Walzeneinheit gleichzeitig um die Pendelachse gegenüber der vorderen Walzeneinheit drehbar ist. Durch diese Maßnahme wird ein Ausgleich zwischen der vorderen und hinteren Walzeneinheit erreicht, so daß keine unzulässig großen Kräfte in den Rahmen der Bodenverdichtungsmaschine eingeleitet werden. Dieser Ausgleich ist insbesondere dann erforderlich, wenn die vordere und hintere Walze in zueinander geneigten Ebenen abrollen.

Nachfolgend wird die Erfindung anhand von Ausführungsbeispielen näher erläutert, die in schematischer Weise in der Zeichnung dargestellt sind. Dabei zeigt:
- Figur 1:: eine Seitenansicht einer erfindungsgemäßen Bodenverdichtungsmaschine ;
- Figur 2: eine Draufsicht auf die hintere Walzeneinheit zusammen mit der zugehörigen Aufnahme;
- Figur 3: eine Draufsicht auf die vordere Walzeneinheit zusammen mit der zugehörigen Aufnahme;
- Figur 4: einen Vertikalschnitt durch die hintere Aufnahme mit angebrachten Lenkbügeln;
- Figur 5: eine Ansicht in Pfeilrichtung V aus Figur 4;
- Figur 6: einen Schnitt ähnlich Figur 4 durch die vordere Aufnahme; und
- Figur 7: eine Ansicht in Pfeilrichtung VII in Figur 6.

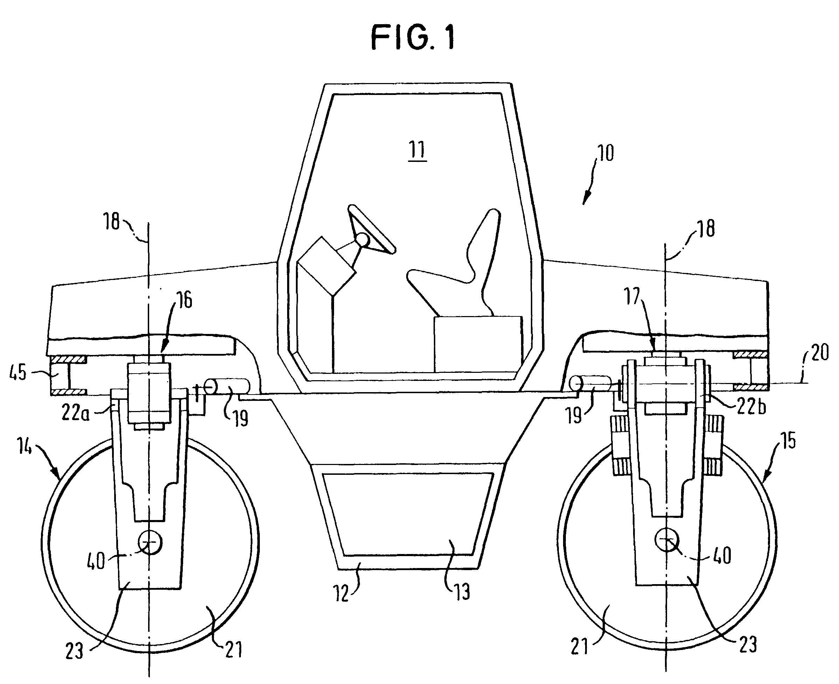

In Figur 1 ist eine Tandemwalze 10 mit einem Fahrstand 11, einer Motorgondel 12 mit einem Motor 13 sowie einer vorderen Walzeneinheit 14 und einer hinteren Walzeneinheit 15 dargestellt. Die vordere Walzeneinheit 14 ist an einer Aufnahme 16 und die hintere Walzeneinheit 15 an einer Aufnahme 17 befestigt. Die Aufnahmen 16, 17 sind an einem Rahmen 45 der Tandemwalze 10 starr festgelegt.

Die Walzeneinheiten 14, 15 sind in den Aufnahmen 16, 17 um eine Lenkachse 18 drehbar. Zum Einleiten der Drehbewegung dient jeweils ein Zylinder 19, der an der jeweiligen Walzeneinheit 14, 15 sowie dem Rahmen 45 befestigt ist.

Die vordere Walzeneinheit 14 weist zwei Lenkbügel 22a auf, die mit Bandagen 23 verbunden sind. Zwischen den Bandagen 23 ist eine Walze 21 um ihre Mittelachse 40 drehbar aufgenommen. Die hintere Walzeneinheit 15 weist Lenkbügel 22b auf, die mit im wesentlichen gleich ausgebildeten Bandagen 23 verbunden sind. Auch hier ist die Walze 21 um ihre Mittelachse 40 drehbar.

Die vordere Walzeneinheit 14 ist lediglich um die Längsachse 18 drehbar, während die hintere Walzeneinheit 15 sowohl um die Lenkachse 18 als auch um eine Pendelachse 20 drehbar ist. Die Pendelachse 20 verläuft im wesentlichen parallel zur Längsachse der Tandemwalze 10.

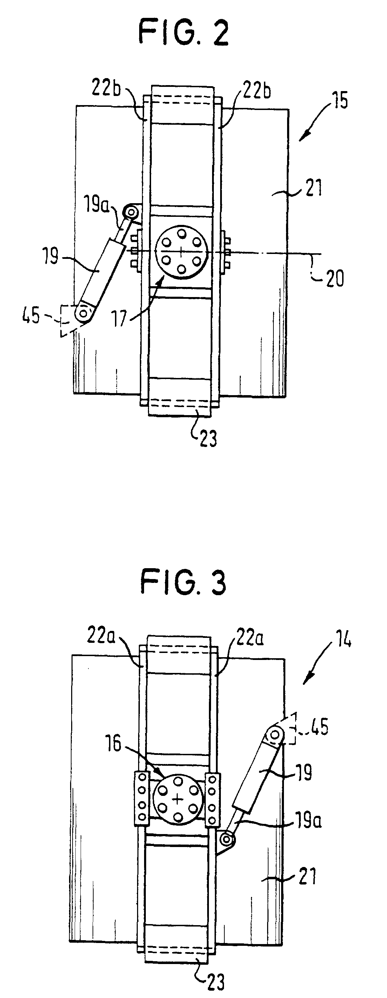

Die Figuren 2 und 3 zeigen jeweils eine Draufsicht auf die hintere Walzeneinheit 15 sowie die vordere Walzeneinheit 14. Der Zylinder 19 ist mit einem Ende am Rahmen 45 befestigt, während seine Kolbenstange 19a an den Lenkbügel 22a oder 22b angreift. Der Zylinder 19 ist bei der hinteren Walzeneinheit 15 etwa auf Höhe der Pendelachse 20 angeordnet. Hierdurch werden Wechselwirkungen zwischen einer Bewegung der hinteren Walzeneinheit 15 um die Pendelachse 20 und dem Zylinder 19 minimiert.

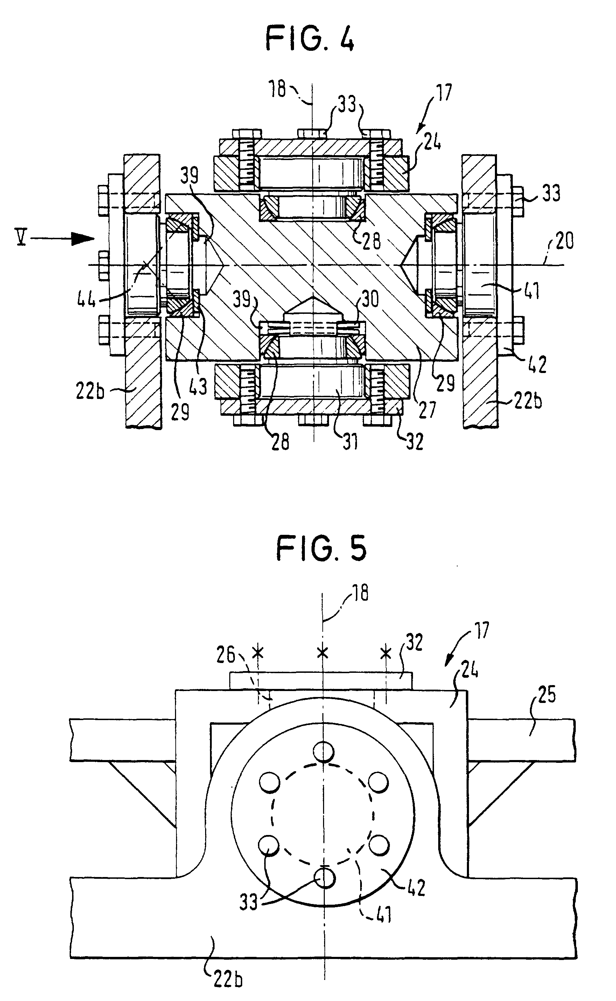

Die Figuren 4 und 5 zeigen eine nähere Darstellung der hinteren Aufnahme 17 zusammen mit einer Lagerung der hinteren Walzeneinheit 15. Die Aufnahme 17 besteht im wesentlichen aus einem rechteckförmigen Rahmen 24, der über Platten 25 an dem Rahmen 45 der Tandemwalze 10 befestigt ist. Zur Versteifung können Dreiecksbleche eingeschweißt werden.

In den Innenraum des Rahmens 24 ist ein Mittelstück 27 eingesetzt. Dieses Mittelstück 27 ist etwa quaderförmig ausgebildet und mit vier Schräggelenklagern 28, 29 versehen, die in zugehörige Lagerausnehmungen 39 im Mittelstück 27 eingesetzt sind. Die Schräggelenklager 28, 29 sind hierbei paarweise einander gegenüberliegend angeordnet. Das erste Paar von Schräggelenklagern 28 ermöglicht eine Drehung um die Lenkachse 18, während das zweite Paar von Schräggelenklagern 29 eine Drehung um die Pendelachse 20 erlaubt.

Die Schräggelenklager 28 werden über Zapfenteile 31 an dem Rahmen 24 der Aufnahme 17 befestigt. Die Zapfenteile 31 durchgreifen hierbei Ausnehmungen 26 im Rahmen 24 und erstrecken sich bis in den Innenring der Schräggelenklager 28. Die Befestigung am Rahmen 24 erfolgt über einen Flansch 32 der Zapfenteile 31 und zugehörige Schrauben 33.

Eines der Schräggelenklager 28 ist über eine Tellerfeder 30 am Mittelstück 27 abgestützt. Die zugehörige Lagerausnehmung 39 ist entsprechend etwas größer ausgebildet. Diese federnde Abstützung bewirkt eine Dämpfung von über die Lenkbügel 22b eingeleiteten Schwingungen, die nicht in vollem Umfang an den Rahmen 45 der Tandemwalze weitergegeben werden. Gleichzeitig werden ein Toleranzausgleich und eine Vorspannung der Schräggelenklager 28 erreicht.

Die weiteren Schräggelenklager 29, die eine Drehung um die Pendelachse 20 ermöglichen, sind mit Zapfenteilen 41 an den Lenkbügeln 22b der Walzeneinheit 15 befestigt. Die Zapfenteile 41 durchgreifen eine Ausnehmung in den Lenkbügeln 22b und greifen in den Innenring der Schräggelenklager 29 ein. Die Befestigung erfolgt über einen Flansch 42 der Zapfenteile 41, der mittels Schrauben 33 an den Lenkbügeln 22b befestigt wird.

Es ist dargestellt, daß beide Schräggelenklager 29 sich mit Ringen 43 am Mittelstück 27 abstützen. Diese Ringe 43 ermöglichen einen Toleranzausgleich. Gleichzeitig kann die Lage der Lenkbügel 22b gegenüber der Lenkachse 18 in gewissem Umfang seitlich verstellt werden.

Eine Drehbewegung der Walzeneinheit 15 um die Lenkachse 18 wird entsprechend durch das drehbar gelagerte Mittelstück 27 über die Schräggelenklager 28 erreicht. Zusätzlich ist die Walzeneinheit 15 über die weiteren Schräggelenklager 29 gegenüber dem Mittelstück 27 um die Pendelachse 20 drehbar.

Zur Montage wird zunächst das Mittelstück 27 in den Rahmen 24 der Aufnahme 17 eingeführt. Anschließend werden von oben und unten die Zapfenteile 31 mit den Schräggelenklagern 28 durch die Ausnehmungen 26 zusammen mit der Tellerfeder 30 eingeführt und mit den Schrauben 33 befestigt. Die Tellerfeder 30 bewirkt einen Toleranzausgleich und eine federnde Lagerung.

Danach wird die Walzeneinheit 15 herangeführt. Die Zapfenteile 41 werden zusammen mit den Schräggelenklagern 29 eingeschoben und über die Schrauben 33 befestigt. Die Ringe 43 für den Toleranzausgleich und die Lagebestimmung der Walzeneinheit 15 werden entweder zusammen mit den Schräggelenklagern 29 oder vor dem Heranführen der Walzeneinheit 15 in die Lagerausnehmungen 39 eingebracht.

Es ist selbstverständlich ebenfalls möglich, die Schräggelenklager 28, 29, die Tellerfeder 30 sowie die Ringe 43 an dem Mittelstück 27 vorzumontieren. Die Abfolge der Montage wird hierdurch nicht verändert.

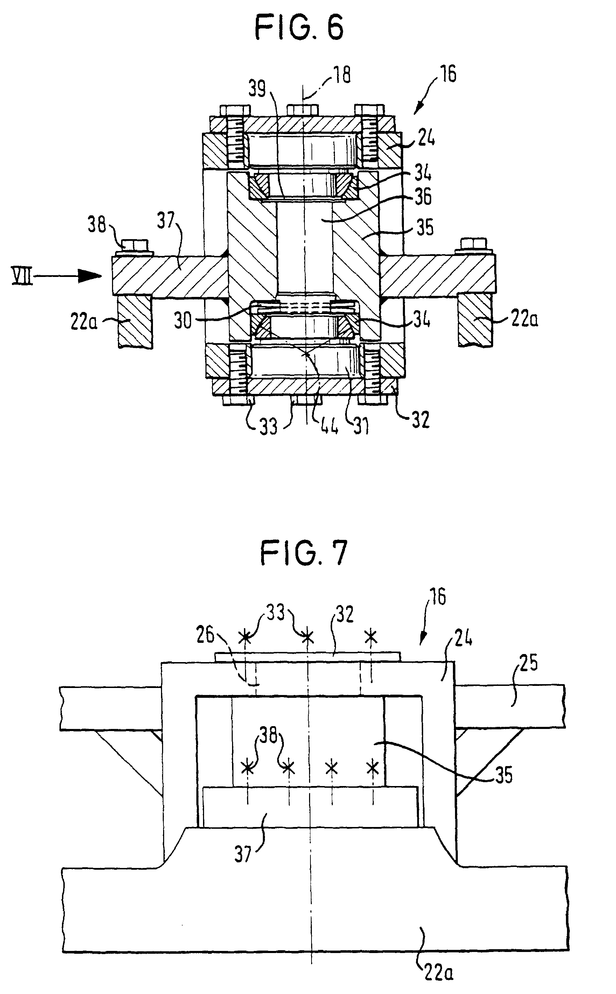

In den Figuren 6 und 7 ist die Lagerung der vorderen Walzeneinheit 14 dargestellt. Es wird ein zylinderisches Mittelstück 35 verwendet, das eine Mittenausnehmung 36 aufweist. Das Mittelstück 35 ist bevorzugt ein dickwandiges Rohr.

Die Lagerung erfolgt über zwei einander gegenüberliegende Schräggelenklager 34, von denen eines über eine Tellerfeder 30 abgestützt ist. Zur Befestigung sind wiederum Zapfenteile 31 vorgesehen. Die Aufnahme 16 ist baugleich mit der Aufnahme 17 ausgebildet. Auch der Einbau und die Funktion der Schräggelenklager 34 sowie der Zapfenteile 31 erfolgen wie bei der hinteren Aufnahme 17. Zur Vermeidung von Wiederholungen wird daher auf die obenstehenden Ausführungen verwiesen.

Das Mittelstück 35 ist starr mit einer Platte 37 verbunden. Die Platte 37 umgreift hierbei das Mittelstück 35 vollständig und ist mittels Schrauben 38 an den Lenkbügeln 22a der vorderen Walzeneinheit 14 befestigt. Die vordere Walzeneinheit 14 ist somit in der Aufnahme 16 lediglich um die Lenkachse 18 drehbar.

Zur Montage wird das Mittelstück 35 in den Rahmen 24 eingeschoben und über die Schräggelenklager 34 und die Zapfenteile 31 befestigt. Der Einbau der Schräggelenklager 34 und der Zapfenteile 31 erfolgt wie der Einbau der Schräggelenklager 28 und der Zapfenteile 31 der hinteren Aufnahme 17. Anschließend wird die vordere Walzeneinheit 14 von unten herangeführt und mit ihren Lenkbügeln 22a über die Schrauben 38 an der Platte 37 befestigt.

Die Verwendung von Schräggelenklagern 28, 29, 34 ermöglicht eine Erhöhung des tragenden Lagerabstands über den tatsächlichen Lagerabstand hinaus. Diese Lageranordnung wird auch als O-Anordnung bezeichnet. Es ist schematisch in den Figuren 4 und 6 dargestellt, daß das Wirkzentrum 44 der Schräggelenklager 29, 34 außerhalb des Mittelstücks 27 liegt. Durch diese Erhöhung des tatsächlich wirksamen Lagerabstands können bei gleicher Baugröße größere Kräfte aufgenommen werden. Darüber hinaus können die Schräggelenklager 28, 29, 34 paarweise gegeneinander verspannt werden. Die Vorspannkraft wird durch die Tellerfeder 30 oder die Ringe 43 erreicht und ermöglicht eine spielfreie und stabile Lagerung.

Insgesamt ergibt sich eine einfache, kostengünstige und kompakte Lagerung der Walzeneinheiten 14, 15 am Rahmen 35 der Tandemwalze. Diese Lagerung ist rasch und einfach zu montieren und ermöglicht eine Drehung der Walzeneinheiten 14, 15 um die Lenkachse 18 sowie einen Ausgleich von Schrägstellungen der Walzeneinheiten 14, 15 zueinander.

## Patentansprüche

1. Bodenverdichtungsmaschine mit mindestens einer Walzeneinheit (14, 15), in der eine zylindrische Walze (21) um ihre Mittelachse (40) drehbar gelagert ist, wobei die mindestens eine Walzeneinheit (14, 15) an einem Rahmen (45) der Bodenverdichtungsmaschine (10) um eine Lenkachse (18) drehbar gelagert und mit einem Mittelstück (27; 35) verbunden ist, das über zwei einander gegenüberliegende wartungsfreie Schräggelenklager (28, 34) um die Lenkachse (18) drehbar gelagert ist, **dadurch gekennzeichnet, daß** zwei Zapfenteile (31), die drehfest mit einer Aufnahme (16, 17) am Rahmen (45) verbunden sind, in das Mittelstück (27, 35) eingreifen, und daß die Schräggelenklager (28, 34) zwischen dem Mittelstück (27, 35) und den Zapfenteilen (31) aufgenommen sind.

2. Bodenverdichtungsmaschine nach Anspruch 1, **dadurch gekennzeichnet, daß** die Schräggelenklager (28, 34) in Lagerausnehmungen (39) des Mittelstücks (27, 35) eingesetzt sind und die Lagerzapfen (31) in Innenringe der Schräggelenklager (28, 34) eingreifen.

3. Bodenverdichtungsmaschine nach Anspruch 1 oder 2, **dadurch gekennzeichnet, daß** eines der Schräggelenklager (28, 34) mit einem Federelement, insbesondere einer Tellerfeder (30), am Mittelstück (27, 35) abgestützt ist.

4. Bodenverdichtungsmaschine nach einem der Ansprüche 1 bis 3, **dadurch gekennzeichnet, daß** die Aufnahme (16, 17) einen im wesentlichen rechteckigen Rahmen (24) aufweist , in den das Mittelstück (27, 35) einschiebbar ist, wobei der Rahmen (24) mit zwei einander gegenüberliegenden Ausnehmungen (26) versehen ist, durch die hindurch die Zapfenteile (31) in die Schräggelenklager (28, 34) am Mittelstück (27, 35) eingreift.

5. Bodenverdichtungsmaschine nach Anspruch 4, **dadurch gekennzeichnet, daß** die Zapfenteile (31) einen Flansch (32) aufweisen, der über Schrauben (33) an dem Rahmen (24) der Aufnahme (16, 17) fixierbar ist.

6. Bodenverdichtungsmaschine nach einem der Ansprüche 1 bis 5, **dadurch gekennzeichnet, daß** die Walzeneinheit (14, 15) zwei Bandagen (23), an denen die Walze (21) um ihre Mittelachse (40) drehbar gelagert ist, sowie zwei Lenkbügel (22a, 22b) zur Verbindung der Bandagen (23) aufweist, die lösbar mit den Bandagen (23) und dem Mittelstück (27, 35) verbunden sind.

7. Bodenverdichtungsmaschine nach einem der Ansprüche 1 bis 6, **dadurch gekennzeichnet, daß** das Mittelstück (35) im wesentlichen zylindrisch ausgebildet ist und starr mit einer Platte (37) verbunden ist, die über Schrauben (38) mit Lenkbügeln (22a) der Walzeneinheit (14) verbunden ist.

8. Bodenverdichtungsmaschine nach einem der Ansprüche 1 bis 6, **dadurch gekennzeichnet, daß** das Mittelstück (27) im wesentlichen quaderförmig ausgebildet ist und zwei weitere wartungsfreie Schräggelenklager (29) mit zugehörigen Zapfenteilen (41) aufweist, die gegenüber den ersten Schräggelenklagern (28) um 90 Grad versetzt angeordnet sind und eine Drehung der Walzeneinheit (15) um eine Pendelachse (20) erlauben, wobei die Zapfenteile (41) Lenkbügel (22b) der Walzeneinheit (15) durchgreifen und an diesem drehfest befestigt sind.

9. Bodenverdichtungsmaschine nach Anspruch 8, **dadurch gekennzeichnet, daß** mindestens eines der Schräggelenklager (29) mit einem Ring (43) zum Toleranzausgleich am Mittelstück (27) abgestützt ist.

10. Bodenverdichtungsmaschine nach einem der Ansprüche 1 bis 9, **dadurch gekennzeichnet, daß** zwei Walzeneinheiten (14, 15) mit zugehörigen Aufnahmen (16, 17) vorgesehen sind.

11. Bodenverdichtungsmaschine nach Anspruch 10, **dadurch gekennzeichnet, daß** die Aufnahmen (16, 17) baugleich sind.

12. Bodenverdichtungsmaschine nach Anspruch 10 oder 11, **dadurch gekennzeichnet, daß** die vordere Walzeneinheit (14) über ein zylindrisches Mittelstück (35) um die Lenkachse (18) drehbar und die hintere Walzeneinheit (15) über ein quaderförmiges Mittelstück (27) um die Lenkachse (18) sowie die Pendelachse (20) drehbar am Rahmen (45) der Bodenverdichtungsmaschine (10) gelagert sind.

## Claims

1. A road roller comprising at least one roller-wheel unit (14, 15) in which a cylindrical roller-wheel (21) is rotationally mounted about its axle (40), the at least one roller-wheel unit (14, 15) being rotationally mounted about a steering axis (18) on a chassis frame (45) of the road roller (10) and connected to a middle piece (27, 35) rotationally mounted via two opposing maintenance-free angular-contact articulation joints (28, 34) about said steering axis (18),
**characterized in that**
two trunnions (31) non-rotatively connected to a mounting fixture (16, 17) on said chassis frame (45) engage said middle piece (27, 35), and that said angular-contact articulation joints (28, 34) are accommodated between said middle piece (27, 35) and said trunnions (31).

2. The road roller as set forth in claim 1,
**characterized in that** said angular-contact articulation joints (28, 34) are inserted in joint openings (39) of said middle piece (27, 35) and said trunnions (31) engage inner rings of said angular-contact articulation joints (28, 34).

3. The road roller as set forth in claim 1 or 2,
**characterized in that** one of said angular-contact articulation joints (28, 34) is supported on said middle piece (27, 35) by a spring element, more particularly by a disk spring (30).

4. The road roller as set forth in any of the claims 1 to 3, **characterized in that** said mounting fixture (16, 17) comprises a substantially rectangular frame (24) into which said middle piece (27, 35) is insertable, said frame (24) being provided with two opposing openings (26) through which said trunnions (31) engage said angular-contact articulation joints (28, 34) at said middle piece (27, 35).

5. The road roller as set forth in claim 4,
**characterized in that** said trunnions (31) comprise a flange (32) for bolting by bolts (33) to said frame (24) of said mounting fixture (16, 17).

6. The road roller as set forth in any of the claims 1 to 5,
**characterized in that** said roller-wheel unit (14, 15) comprises two struts (23) on which said roller-wheel (21) is mounted for rotation about its axle (40), as well as two steering brackets (22a, 22b) for connecting said struts (23) releasably connected thereto and connected to said middle piece (27, 35).

7. The road roller as set forth in any of the claims 1 to 6,
**characterized in that** said middle piece (35) is configured substantially cylindrical and rigidly connected to a plate (37) bolted by bolts (38) to said steering brackets (22a) of said roller-wheel unit (14).

8. The road roller as set forth in any of the claims 1 to 6,
**characterized in that** said middle piece (27) is configured substantially cuboidal and comprises two further maintenance-free angular-contact articulation joints (29) with assigned trunnions (41) arranged at right angles to said first angular-contact articulation joints (28) and permits rotation of said roller-wheel unit (15) about an oscillation axis (20), said trunnions (41) passing through said steering brackets (22b) of said roller-wheel unit (15) and being non-rotatively secured thereto.

9. The road roller as set forth in claim 8,
**characterized in that** at least one of said angular-contact articulation joints (29) is supported by a ring (43) at said middle piece (27) for tolerance compensation.

10. The road roller as set forth in any of the claims 1 to 9,
**characterized in that** two roller-wheel units (14, 15) are provided with corresponding mounting fixtures (16, 17).

11. The road roller as set forth in claim 10,
**characterized in that** said mounting fixtures (16, 17) are configured identical.

12. The road roller as set forth in claim 10 or 11,
**characterized in that** said front roller-wheel unit (14) is mounted via a cylindrical middle piece (35) rotatable about said steering axis (18) and said rear roller-wheel unit (15) is mounted via a cuboidal middle piece (27) rotatable about said steering axis (18) as well as about said oscillation axis (20) on said chassis frame (45) of said road roller (10).

## Revendications

1. Compacteur routier comportant au moins une unité cylindre (14, 15), dans lequel un rouleau cylindrique (21) est monté en rotation autour de son axe central (40), ladite au moins une unité cylindre (14, 15) étant montée en rotation autour d'un axe directeur (18) sur un cadre (45) du compacteur routier (10) et étant reliée à un tronçon central (27; 35) qui est monté en rotation autour de l'axe directeur (18) via deux paliers d'articulation oblique (28, 34) sans entretien opposés l'un à l'autre,
**caractérisé en ce que** deux parties formant tourillon (31) reliées solidairement en rotation à un logement (16, 17) sur le cadre (45) s'engagent dans le tronçon central (27, 35), et **en ce que** les paliers d'articulation oblique (28, 34) sont logés entre le tronçon central (27, 35) et les parties formant tourillon (31).

2. Compacteur routier selon la revendication 1,
**caractérisé en ce que** les paliers d'articulation oblique (28, 34) sont mis en place dans des évidements de montage (39) du tronçon central (27, 35), et **en ce que** les tourillons de montage (31) s'engagent dans des bagues internes des paliers d'articulation oblique (28, 34).

3. Compacteur routier selon l'une ou l'autre des revendications 1 et 2,
**caractérisé en ce que** l'un des paliers d'articulation oblique (28, 34) est appuyé par un élément élastique, en particulier par une rondelle-ressort (30), sur le tronçon central (27, 35).

4. Compacteur routier selon l'une quelconque des revendications 1 à 3,
**caractérisé en ce que** le logement (16, 17) comprend un cadre (24) sensiblement rectangulaire dans lequel peut venir s'introduire le tronçon central (27, 35), le cadre (24) étant pourvu de deux évidements (26) opposés l'un à l'autre à travers lesquels s'engagent les parties formant tourillon (31) dans les paliers d'articulation oblique (28, 34) sur le tronçon central (27, 35).

5. Compacteur routier selon la revendication 4,
**caractérisé en ce que** les parties formant tourillon (31) comprennent une bride (32) susceptible d'être fixée sur le cadre (24) du logement (16, 17) au moyen de vis (33).

6. Compacteur routier selon l'une quelconque des revendications 1 à 5,
**caractérisé en ce que** l'unité cylindre (14, 15) comprend deux bandages (23) sur lesquels le rouleau (21) est monté en rotation autour de son axe central (40), ainsi que deux étriers directeurs (22a, 22b) pour relier les bandages (23), qui sont reliés de façon détachable aux bandages (23) et au tronçon central (27, 35).

7. Compacteur routier selon l'une quelconque des revendications 1 à 6,
**caractérisé en ce que** le tronçon central (35) est réalisé sensiblement cylindrique et relié rigidement à une plaque (37) qui est reliée aux étriers directeurs (22a) de l'unité cylindre (14) via des vis (38).

8. Compacteur routier selon l'une quelconque des revendications 1 à 6,
**caractérisé en ce que** le tronçon central (27) est réalisé sensiblement parallélépipédique et comprend deux autres paliers d'articulation oblique (29) sans entretien avec des parties formant tourillon associées (41) qui sont agencées avec un décalage de 90° par rapport aux premiers paliers d'articulation oblique (28) et qui permettent une rotation de l'unité cylindre (15) autour d'un axe oscillant (20), les parties formant tourillon (41) traversant des étriers directeurs (22b) de l'unité cylindre (15) et étant fixées solidairement en rotation sur ceux-ci.

9. Compacteur routier selon la revendication 8,
**caractérisé en ce que** l'un au moins des paliers d'articulation oblique (29) est appuyé contre le tronçon central (27) au moyen d'un anneau pour compenser les tolérances.

10. Compacteur routier selon l'une quelconque des revendications 1 à 9,
**caractérisé en ce qu'il** est prévu deux unités cylindres (14, 15) avec des logements associés (16, 17).

11. Compacteur routier selon la revendication 10,
**caractérisé en ce que** les logements (16, 17) sont de structure identique.

12. Compacteur routier selon l'une ou l'autre des revendications 10 et 11,
**caractérisé en ce que** l'unité cylindre avant (14) est montée en rotation autour de l'axe directeur (18) via un tronçon central cylindrique (35), et l'unité cylindre arrière (15) est montée en rotation autour de l'axe directeur (18) et de l'axe oscillant (20) via un tronçon central parallélépipédique (27) sur le cadre (45) du compacteur routier (10).
